Europäisches Patentamt

European Patent Office

Office européen des brevets

(11) Publication number: **0 157 068**
**A2**

# EUROPEAN PATENT APPLICATION

(21) Application number: **84830189.1**

(51) Int. Cl.⁴: **E 02 B 15/04**

(22) Date of filing: **20.06.84**

(30) Priority: **06.04.84 IT 4800284**

(71) Applicant: **Crespi, Luigi B., Via R. Doria, 77, I-18034 Ceriana (IM) (IT)**

(43) Date of publication of application: **09.10.85 Bulletin 85/41**

(72) Inventor: **Crespi, Luigi B., Via R. Doria, 77, I-18034 Ceriana (IM) (IT)**

(84) Designated Contracting States: **AT BE CH DE FR GB LI NL SE**

(74) Representative: **Mascioli, Alessandro, Prof.Dr., c/o A.N.D.I. Associazione Nazionale degli Inventori Via Lima, 35, I-00198 Roma (IT)**

(54) Device for collecting crude oil from marine surfaces.

(57) Device for collecting crude oil from marine surfaces, comprising:

– a container for collecting the oil, supported by several major external floats, surrounded by fins which open and broaden to the front, and which can collect the crude oil and pass it into said container for skimming, during the movement caused by a ship with the device applied in front of its bow; sea level is kept at the upper edge of said container;

– an intermediate thrust boat carrying the pump for aspirating the floating oil in the upper portion of said container and that for extracting the water on the bottom of it;

– an inlet tube for compressed air in said external floats;

– an automatic level stabilizing valve and an air inlet/outlet valve;

– electrical cables and an automatic switch for the water pump motor.

ACTORUM AG

## Device for collecting crude oil from marine surfaces

Crespi Luigi   ---   Italy

This invention concerns a floating device, preferably made of sheet steel, for collecting and recovering mainly crude oil spread over marine suffaces.

The severe problem is well known of water pollution due to the discharge and washing of the tanks of oil tanders, which leaves large slicks of oil on marine surfaces, with consequent alteration of the life of animal and plant organisms as well as fouling of the coasts due to current effects.

Under this aspect, the situation of ports and areas along the major routes is particularly serious.

The aim of this invention is to realize a simple device, low in cost, readily built using known technology, whibh can collect and eventually recover the crude oil spread on the suffaces.

This aim is achieved with the device according to the invention, comprising:
- a container for collecting the oil, supported by several major external floats, surrounded by fins which open and broaden to the front, and which can collect the crude oil and pass it into said
container for skimming, during the movement caused
by a ship with the device applied in front of its
bow; sea level is kept at the upper edge of said
container;

- an intermediate thrust boat carrying the pump
for apirating the floating oil in the upper
portion of said container and that for extracting
the water on the bottom of it;

- an inlet tube for compressed air in said external
floats;

- an automatic level stabilizing valve and an air
inlet/outlet valve;

- electrical cables and an automatic switch for
the water pump motor.

The invention is presented in a preferred but
purely exemplifying and non limiting embodiment
in the attached drawings, which show:

- figure 1, a side schematization;

- figure 2, a top view;

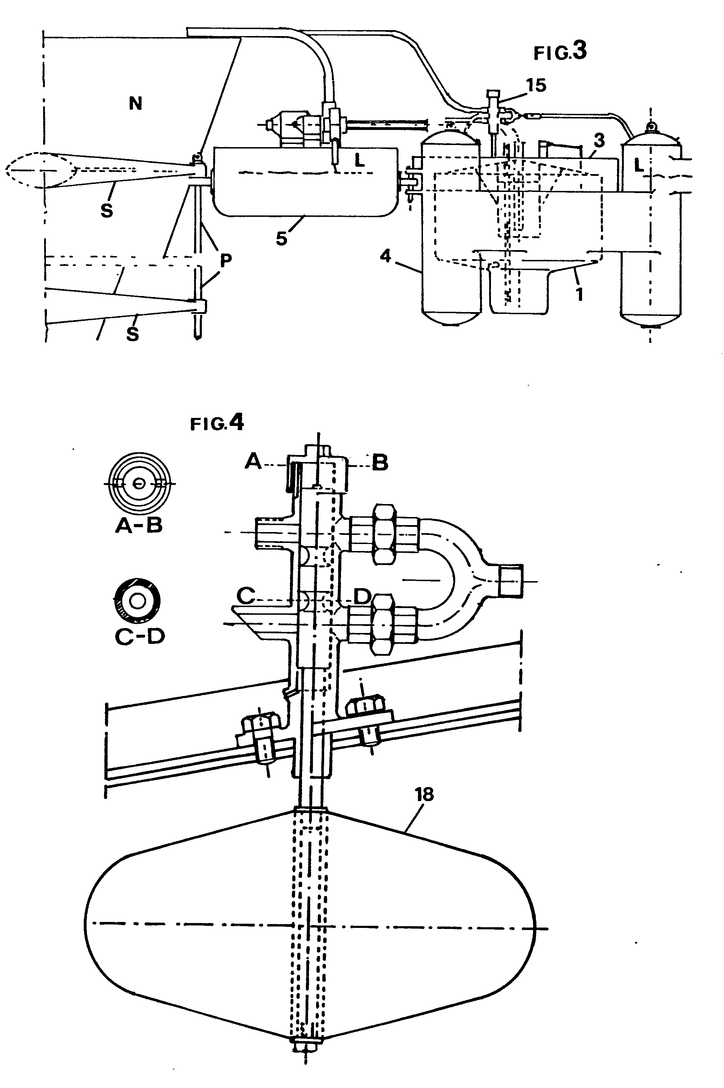

- figure 3, a side view of the device applied to a
thrust boat being put into operation;

- figure 4, a partially sectioned side view of
the automatic level stabilizing valve, with
sections A-B and C-D.

The figures show in detail:

- the container 1 for collecting the oil;

- the cover 2 reinforced with radial V-shaped sections;

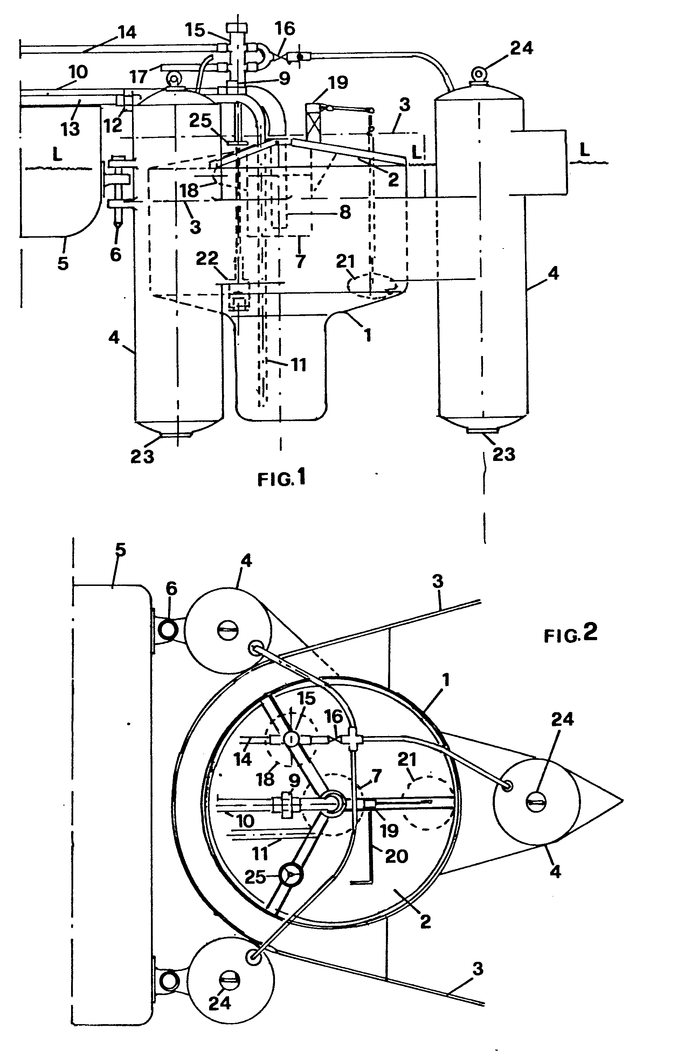

- the pretroleum collecting fins 3; in figure 1 the fins are represented with dashed and dotted lines;

- the principle external floats 1;

- the intermediate thrust and pump-bearing boat 5;

- the structure 6 connecting the two boats, designed to allow independent float;

- the draft vessel 7 of the petroleum aspirating tube;

- the aspirating tube 8, preferably made of steel;

- the juncture 9;

- the flexible tube 10 attached to the petroleum pump;

- the steel water aspirating tube 11;

- the juncture 12;

- the flexible tube 13 attached to the water pump;

- the inlet tube 14 for putting compressed air in the floats 4;

- the automatic lovel-stabilizing valve 15;

- the air inlet and/or outlet valve 16;

- the opening 17 for letting air out of the floats 4;

- the internal float 18 of the automatic valve 15;

- the automatic electric switch 19 of the water pump motor;

- the electric cable 20 from the tanker N;

- the inner float 21 between water and petroleum;

- the water inlet valve 22;

- the opening 23 for inlet and/or outlet of water according to the level L;

- 4 -    0157068

- the attaching rings 24 for raising and placing the device;
- the wheel 25 for operating valve 22;
- the structures 5 supporting pin P for a hinged connection between the device and the bow of boat N.

The collecting-boat device may be placed in the sea for operation by a rotating arm crane on the bow of the tanker.

Upon immersion, valve 22 opens and valve 16 closes; Water then enters the collection container 1 through open valve 22 and the external floats 4 through the opening 23 until the air in the floats reaches a pressure of approximately 1/3 atmosphere.

At this point the water in container 1 will have reached the upper level, and the inner float 18 will have automatically closed valve 15.

The two boats are then connected with connections 6, valve 16 is opened, valve 22 is closed and finally the electrical pumps and compressor are placed in operation, the latter regulated at 3 to 5 atmospheres depending on the conditions of the sea.

Also, the tanker is put into motion very slowly so that the two boats are pushed forward a few meters per minute, adjusted according to the delivery of the pumps.

The generator and compressor, with compressed air tank, are situated on the tanker.

In a possible variant of the invention, the water pump, the valve 22, the electrical switch 19, the tubes and the other mechanisms described may be eliminated.

In this case, when the pump and valve 22 are eliminated, the collection container 1 must have an opening on the bottom from which water can go out and /or come in, equipped with an indicator for the difference in level between the petroleum and the sea.

The V-shaped sections reinforcing the cover 2 and fixing it to container 1, bear the aspirating tubes 8 and 11, automatic switch 23, stabilizing valve 15 and wheel 25 for operating valve 22.

The cover 2, made of steel sheet, forms peripherally with the container 1 a circular opening a few centimeters wide, through which the petroleum enters.

When the sea is fairly rough, waves carrying water

0157068

as well may come into the container; however, they break on the cover without disturbing the oil on the sufface going into the draft vessel 7.

The cover with the conical surface makes the wave enter the peripheral opening, so that the water can deposit on the bottom of the container.

Of course, while the principle of the finding remains the same, the realization forms and constructEon details may be varidd widely from that described and illustrated here, without going beyond the bounds of the present invention.

Claims

1. Device for collecting crude oil from marine suffaces, comprising;

- a container for collecting the oil, supported by several major external floats, surrounded by : fins which open and broaden to the front, and which can collect the crude oil and pass it into said container for skimming, during the movement caused by a ship with the device applied in front of its bow; sea level is kept at the upper edge of said container;

- an intermediate thrust boat carrying the pump for aspirating the floating oil in the upper portion of said container and that for extracting the water on the bottom of it;

- an inlet tube for compressed air in said external floats;

- an automatic level stabilizing valve and an air inlet/outlet valve;

- electrical cables and an automatic switch for the water pump motor.

2. Device for collecting crude oil according to claim 1, characterized by the presence of:

- the container 1 for collecting the oil;

- the cover 2 reinforced with radial V-shaped sections;

- the petroleum collecting fins 3; in figure 1 the

f

fins are represented with dashed and dotted lines;

- the principle external floats 4;

- the intermediate thrust and pump-bearing boat 5;

- the structure 6 connecting the two boats, designed to allow independent float;

- the draft vessel 7 of the petroleum aspirating tube;

- the aspirating tube 8, preferably made of steel;

- the juncture 9;

- the flexible tube 10 attached to the petroleum pump;

- the steel water aspirating tube 11;

- the juncture 12;

- the flexible tube 13 attached to the water pump;

- the inlet tube 14 for putting compressed air in the floats 4;

- the automatic level-stabilizing valve 15;

- the air inlet and/or outlet valve 16;

- the opening 17 for letting air out of the floats 4;

- the internal float 18 of the automatic valve 15;

- the automatic electric switch 19 of the water pump motor;

- the electric cable 20 from the tanker N;

- the inner float 21 between water and petroleum;

- the water inlet valve 22;

- the opening 23 for inlet and/or outlet 6f water according to the level L;

- the attaching rings 24 for raising and placing the device;

- the wheel 25 for operating valve 22;

0157068

- the structures 5 supporting pin P for a hinged
  connection between the device and the bow of
  boat N.

0157068

FIG.1

FIG.2

0157068

FIG.3

N

S

P

S

L

5

15

3

L

4

1

FIG.4

A

B

A-B

C

D

C-D

18